# EUROPÄISCHE PATENTANMELDUNG

(11) **EP 2 908 521 A1**
(43) Veröffentlichungstag der Anmeldung: **19.08.2015**
(21) Anmeldenummer: 15151646.5
(22) Anmeldetag: 19.01.2015
(51) Int. Cl.: H04N 17/00, G01B 11/00

(54) **Optische Messvorrichtung für digitale Bildaufnahmevorrichtung**

(30) Priorität: 13.02.2014 DE 202014100635 U
(71) Anmelder: Denz, Peter, 81673 München (DE)
(72) Erfinder: Denz, Peter, 81673 München (DE); Finauer, Tobias, 85646 Anzing (DE)
(74) Vertreter: Puschmann Borchert Bardehle Patentanwälte Partnerschaft mbB

(57) **Zusammenfassung**

Die Erfindung betrifft eine Messvorrichtung (OM) zur lösbaren Verbindung mit dem Objektivflansch (19) einer digitalen Videokamera (VK) für die Bestimmung der Position ihres Bildsensors (BS) unter Anwendung des Kollimator-Prinzips mit zwei in einem gemeinsamen Gehäuse (10) der Messvorrichtung (OM) angeordneten konzentrisch zueinander liegenden optischen Systemen mit einem Projektor (12), dessen Strahlung über durch ein Handstellmittel (29) einstellbare Blenden (13, 55), eine nachgeschaltete Verbundlinse (15) und einem Filter (FF) auf den Bildsensor (BS) einwirkt, zur Ermittlung der Position des Bildsensors der Videokamera entlang der X- und Y-Achse, seiner möglichen Drehung um diese Achsen sowie einer möglichen Krümmung in Bezug auf diese Achsen.

## Beschreibung

Die Erfindung betrifft eine optische Messvorrichtung zur lösbaren Verbindung mit dem Objektivflansch einer digitalen Videokamera für die Bestimmung der Position des Bildsensors unter Anwendung des Kollimator-Prinzips.

Bekanntlich ist es mit einer gängigen Autokollimator-Anordnung möglich, die Neigung einer reflektierenden Fläche gegenüber der optischen Achse zu messen. Da Autokollimatoren meistens zur Bestimmung der optischen Güte eines Systems eingesetzt werden, ist ihr Licht grün und der gesamte Autokollimator groß und schwer. Das grüne Licht wird von der lichtempfindlichen Schicht eines Bildsensors nur schlecht reflektiert, was die Auswertung erschwert.

Um zu ermitteln, ob ein Bildsensor relativ zum Objektivflansch richtig zentriert ist, wird die Kamera um die durch ihren Flansch definierte optische Achse rotiert, wodurch ein Bild aus Punkten auf dem Bildsensor eine Spur konzentrischer Kreise hinterlässt. Der Mittelpunkt dieser Kreise entspricht dann dem Schnittpunkt der optischen Achse mit dem Bildsensor.

Bekanntlich kann nicht angenommen werden, dass der Bildsensor einer digitalen Videokamera in Bezug zur Objektivaufnahme richtig positioniert ist. Der Bildsensor kann insbesondere entlang der X-und γ-Achse verschoben sein, um diese Achsen gedreht sein oder gar eine Krümmung aufweisen. Methoden zur Messung der Krümmung eines derartigen Sensors existieren nicht, da in der Regel vorausgesetzt wird, dass ein solcher Sensor Plan angeordnet ist. Die genannten Fehlstellungen führen zu einer unscharfen Abbildung in der Bildebene der Videokamera.

Wie die Erfahrung gezeigt hat, ist eine Auswertung solcher Messungen mit bloßem Auge subjektiv und Fehler anfällig. Auch besteht der Nachteil, dass die lichtempfindliche Schicht solcher Bildsensoren das Licht gängiger Autokollimatoren nur ungenügend reflektiert.

Der Erfindung liegt daher die Aufgabe zugrunde eine neue optische Messeinrichtung zur weitestgehend störungsfreien Lösung dieser Probleme zu schaffen.

Diese Aufgabe ist erfindungsgemäß gelöst durch zwei im Gehäuse der Messvorrichtung angeordnete konzentrisch zueinander liegende optische Systeme, mit einem Projektor, dessen Strahlung über einstellbare Blenden und eine nachgeschaltete Verbundlinse auf den Bildsensor einwirkt, zur Ermittlung der Position des Bildsensors der Videokamera entlang der X- und γ-Achse, seiner möglichen Drehungen um diese Achsen sowie einer möglichen Krümmung in Bezug auf diese Achsen.

Erfindungsgemäß sind die Blenden der optischen Systeme mit der Verbundlinse optisch gekoppelte Lochblenden, von denen die der Hauptachse zugeordnete Blende als Schiebeblende und die dem außerhalb der Hauptachse liegenden Blendenbereich des Autokollimators zugeordnete Blende eine sogenannte Revolverblende mit einer zentralen der Hauptachse zugeordneten zentralen Öffnung ausgebildet ist, wobei die Lochblenden und die Verbundlinse fluchtend mit der Hauptachse der optischen Systeme in einer einen Teil der Messvorrichtung bildenden mehrteiligen Halterung gelagert sind.

Hierbei ist vorzugsweise die der Halterung zugeordnete Revolverblende feststehend und die der Halterung zugeordnete Schiebeblende als Teil eines kurvengeführten hin- und her beweglichen Schiebers ausgebildet.

Besonders vorteilhaft ist es, wenn nach einem weiteren Merkmal der Erfindung die Halterung zwei zylindrische schalenförmig ausgebildete Gehäuseteile umfasst, zwischen denen eine den Umfang der Gehäuseteile teilweise durchdringendes als Handstellmittel dienende Lagerscheibe drehbeweglich gelagert ist, dessen dem Projektor zugewandte Fläche eine gradlinige Kurvenführung zur Aufnahme der Schiebeblende mit einer der Hauptachse zugeordneten zentralen Öffnung und parallel dazu einer außermittig angeordneten, der Revolverblende zugeordneten Öffnung aufweist und dass das dem Projektor zugewandte Gehäuseteil eine ebene Kurvennut zur Aufnahme einer auf der Schiebeblende angeordneten Rolle trägt zwecks Überführen der Schiebeblende in die jeweils geforderte Messlage.

Weitere Merkmale der Erfindung ergeben sich aus den Unteransprüchen.

Durch die erfindungsgemäße Ausbildung wird eine neue optische Messvorrichtung geschaffen, durch die zwei optische Systeme konzentrisch ineinander liegend einer Verbundlinse zugeordnet werden, wobei es über den Blendenmechanismus möglich ist, zwischen den beiden optischen Systemen zu selektieren. Ist die Projektion über das optische System im Zentrum ausgeblendet, lässt sich die Autokollimator-Optik im äußeren Bereich verwenden, um die Neigung des Bildsensors zu messen. Durch ein Messen der Neigung in verschiedenen Sektoren des äußeren optischen Systems kann zudem eine Varianz der Neigung der Bildsensoroberfläche festgestellt und daraus ein Maß für die Krümmung abgeleitet werden. Wird nur das innere optische System aufgedeckt und das äußere mit der zugeordneten Blende verschlossen, tritt ausschließlich die Projektion des Bildes auf dem Bildsensor in Erscheinung. Dies ist werkseitig so eingestellt, dass sie die optische Achse markiert. Das Licht durchläuft kurz nach der Lichtquelle einen Farbfilter der nur ein schmales rotes Band passieren lässt. Dies steigert die Leistungsfähigkeit der Autokollimator-Funktion bezüglich der lichtempfindlichen Schicht des zu messenden Bildsensors.

Eine solche Anordnung gibt die Möglichkeit eine solche optische Messeinrichtung klein zu bauen um eine notwendige direkte Verbindung mit dem Objektivflansch der zu prüfenden Videokamera zu haben ohne dass das Gewicht des Messgerätes einen signifikanten Einfluss auf die Messung hat. Die Auswertung der Mittelpunkt-Messung geschieht über das Videosignal aus der zu prüfenden Kamera und ist durch eine integrierte softwareseitige Bildverarbeitung von einer Interpretation des Benutzers unabhängig. Damit kann eine in situ Messung erfolgen. Man erreicht leicht handbare Formfaktoren und das Gesamtgewicht der Messvorrichtung ist gering genug für eine einfache Handhabung. Dadurch dass das Messgerät direkt auf dem Flansch der Kamera aufliegt, ist diese zwingend orthogonal zu dieser ausgerichtet. Die Auswertung der Autokollimator-Messung erfolgt durch einen in das Messgerät integrierten Bildsensor.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: einen Längsschnitt durch das optische Messgerät gemäß der Erfindung;
- Fig. 2a: eine schematische Darstellung der möglichen Positionsänderungen des Bildsensors der Videokamera um die X- und Y-Achse;
- Fig. 2b: eine schematische Darstellung der möglichen Positionsänderungen des Bildsensors der Videokamera bezüglich dessen Krümmung;
- Fig. 3: eine perspektivische Ansicht einer ein Teil der optischen Messvorrichtung bildenden Halterung von Blenden und Verbundlinse;
- Fig. 4: einen Schnitt links der Hauptachse durch die Halterung nach Fig. 3;
- Fig. 5: einen Schnitt längs der Linie AA in Fig. 4;
- Fig. 6: einen Schnitt längs der Linie BB in Fig. 4;
- Fig. 7: einen Schnitt längs der Linie EE in Fig. 4, und
- Fig. 8: eine perspektivische Ansicht eines Teils der Halterung gegenüberliegend dem Bildsensor.

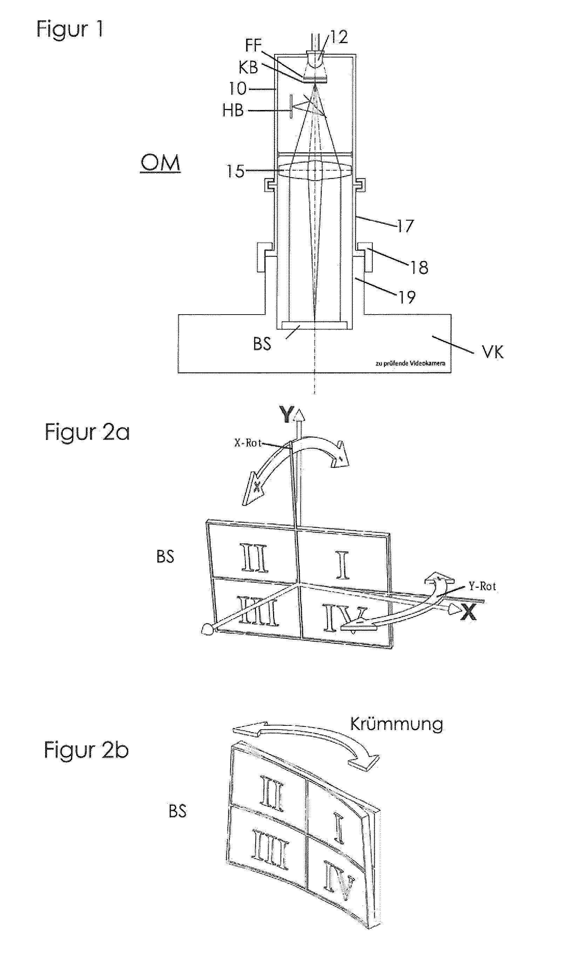

Wie Fig. 1 zeigt, sind in einem Gehäuse 10 längs einer Hauptachse HA ein Projektor 12, diesem zugordnete einstellbare Blenden 13, 55 und eine als Sammellinse wirkende Verbundlinse 15 zu zwei konzentrisch zueinander liegenden optischen Systemen in Bezug auf einen Bildsensor BS einer digitalen Videokamera VK vereinigt und bilden einen Kollimator, dem ein rot -λ-650-750 - durchlässiges Farbfilter FF, eine Kreuzblende KB sowie ein nicht näher dargestellter Bildsensor HB nachgeschaltet sind, als Bauteile der neuen Messvorrichtung.

Das Gehäuse 10 ist in üblicher Weise rohrförmig ausgebildet und kann über einen Flanschadapter 17 (Fig. 1) und einer Überwurfmutter 18 mit dem Objektivflansch 19 der nur schematisch dargestellten digitalen Videokamera VK lösbar verbunden werden.

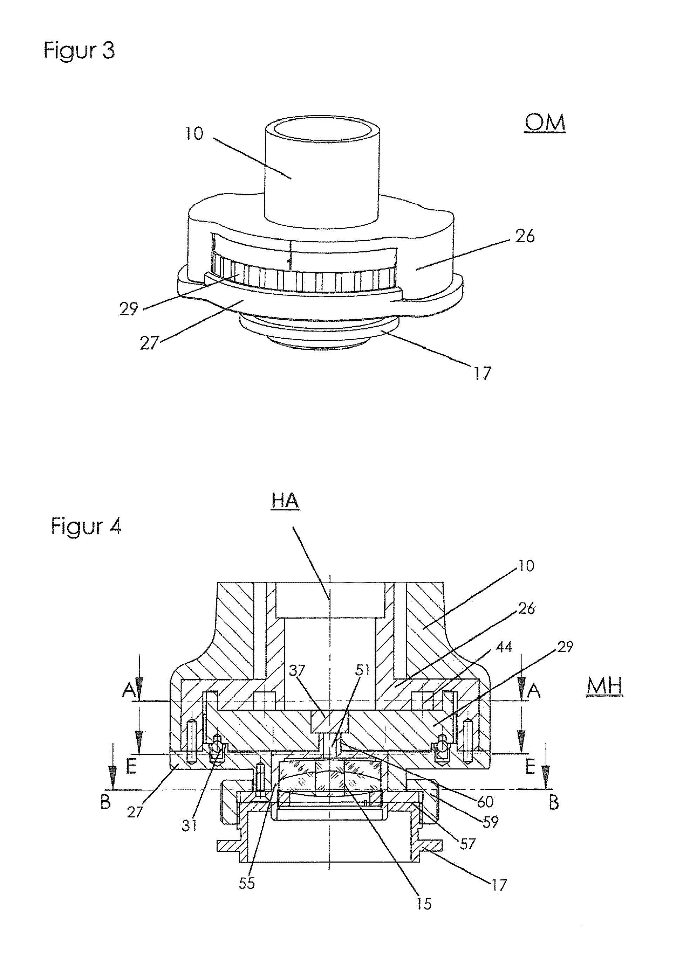

In den Fig. 2a und Fig. 2b ist die mögliche Verkippung des Bildsensors BS der Videokamera um und längs der X- und γ-Achse (Fig. 2a) sowie eine mögliche Krümmung (Fig. 2b) dargestellt. Die Blenden 13, 55 sowie die Verbundlinse 15 sind, wie insbesondere Fig. 4 zeigt, in einer mehrteiligen Halterung MH befestigt.

Die mehrteilige Halterung MH besteht aus zwei zylindrischen, schalenförmig ausgebildeten Gehäuseteilen 26 und 27, die drehbeweglich eine als geriffeltes Handstellmittel ausgebildete Lagerscheibe 29 lagern, die den Umfang der Gehäuseteile teilweise durchdringt, wie dies Fig. 3 zeigt. Über übliche Rastmittel 31 kann die Lagerscheibe 29 in fünf vorbestimmten Schaltstellungen "0", "1", "2", "3" und 4" spürbar gerastet werden, vgl. Fig. 3, Ziffer "I".

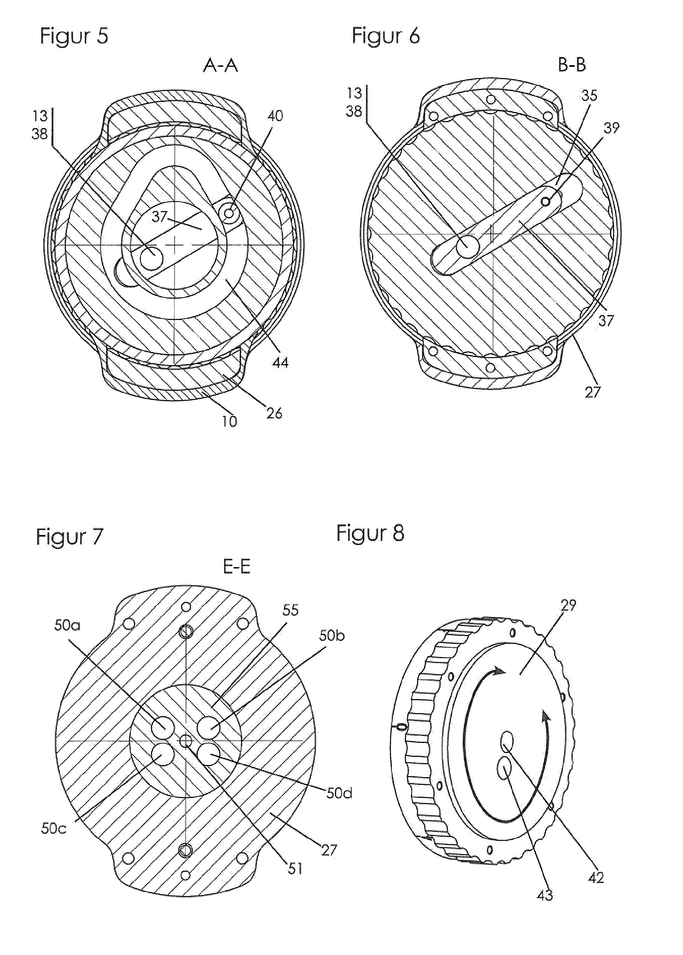

Die Lagerscheibe 29 weist, wie Fig. 4 zeigt, einen quer zu Hauptachse liegenden Führungsschlitz 35 als gerade Kurvenführung auf zur Aufnahme der als Schiebeblende 37 ausgebildete Blende 13, die nahe ihrem einen Ende eine als Lochblende dienende Öffnung 38 und am gegenüberliegenden Ende eine Lagerstelle 39 zwecks Aufnahme einer Führungsrolle 40 aufweist. Die Lagerscheibe 29 weist ferner eine zentrale Durchgangsöffnung 42 und parallel dazu, aber versetzt, eine zweite Durchgangsöffnung 43 auf, vgl. Fig. 8.

Für die Erzeugung einer Schiebebewegung dient eine in das dem Projektor zugewandte Gehäuseteil 26 eingearbeitete ebene Kurvennut 44, in die im zusammengebauten Zustand die Führungsrolle 40 der Schiebeblende eingreift zwecks Überführen der Schiebeblende 13 (37, 38) durch Drehen der als Handstellmittel dienenden Lagerscheibe 29 in die jeweils geforderte Messlage.

Dem Gehäuseteil 27 ist die als sogenannte Revolverblende ausgebildete Blende 55 systemfest, also feststehend, vgl. Fig. 7, zugeordnet, die vier symmetrisch aber außermittig angeordnete Öffnungen 50a, 50b, 50c, 50d sowie eine zentrale, in der Hauptachse liegende Öffnung 51 aufweist. Die Öffnungen 50a, 50b, 50c, 50d befinden sich in dem Bodenteil der als topfförmiges Formteil ausgebildeten Blende 55, die gleichzeitig die Fassung für die Verbundlinse 15 bildet und über einen an der äußeren Mantelfläche befindlichen Flansch 57 zwischen dem Gehäuseteil 27 und dem Flanschadapter 17 mittels einer Überwurfmutter 59 hauptachsenfest eingespannt ist. Die der Hauptachse zugeordnete zentrale Öffnung 51 ist als hohler Führungszapfen 60 ausgebildet und ragt zentrisch durch die zentrale Öffnung 42 der Lagerscheibe 29 und endet bündig an dem die Öffnung 38 aufweisenden Schieber 37. Die Durchgangsöffnung 42 [Fig. 8] befindet sich in der Stellung "0" der Lagerscheibe 29 in der Hauptachse HA der Messeinrichtung, dagegen kann in den Schaltstellungen "1" bis "4" der Lagerscheibe die außermittige Durchgangsöffnung 43 jeweils mit einer der Öffnungen 50a, 50b, 50c und 50d der Revolverblende 55 zusammenwirken, hierbei ist die zentrale Öffnung 42 durch die Schiebeblende 37 abgedeckt.

Schließlich ist für die weitere Auswertung der Autokollimator-Messung der Messvorrichtung OM ein Bildsensor HB zugeordnet.

Das Zusammenwirken der vorstehend beschriebenen Bauteile ermöglicht die Strahlung des Projektors 12 entweder - in der Raststellung "0", vgl. Fig. 3 - in der die Öffnung 13 der Schiebeblende 37 zentrisch zur Hauptachse HA ausgerichtet ist ausschließlich zur Projektion des Bildes des Bildsensors benutzt werden oder wenn durch Verschieben der Schiebeblende 37 die Projektion im Zentrum also in der Hauptachse ausgeblendet ist können je nach Raststellung "1" bis "4" des Handstellmittels, also der Lagerscheibe 29 je eine der Öffnungen 50 des als Revolverblende wirkenden Formteils 55 wirksam werden, um auf diese Weise die Änderung der Position, zum Beispiel die Neigung des Bildsensors der Videokamera, ermittelt werden. Das Licht des Projektors 12 durchläuft also nach Passieren des Farbfilters FF gesteuert durch die vorstehend beschriebene Blendenkombination entweder das Zentrum der Verbundlinse 15 oder deren äußeren Bereiche, um die oben genannten Messungen durchführen zu können.

### Bezugszeichenliste

- 10: Gehäuse
- 12: Projektor
- 13: Öffnung in der Schiebeblende 37
- 14: Revolverblende
- 15: Verbundlinse
- 17: Flanschadapter
- 18: Überwurfmutter
- 19: Objektivflansch
- 26: Gehäuseteil
- 27: Gehäuseteil
- 29: Lagerscheibe
- 31: Rastmittel
- 35: Führungsschlitz
- 37: Schieber der Schiebeblende
- 38: Öffnung
- 39: Lagerstelle
- 40: Führungsrolle
- 42: Durchgangsöffnung, Lagerscheibe
- 43: Durchgangsöffnung versetzt
- 44: Kurvennut
- 50a: Öffnung
- 50b: Öffnung
- 50c: Öffnung
- 50d: Öffnung
- 51: Öffnung
- 55: Formteil als Revolverblende
- 56: Mantelfläche
- 57: Flansch
- 59: Überwurfmutter
- 60: Führungszapfen

- BS: Bildsensor (Videokamera)
- FF: Farbfilter
- HA: Hauptachse
- HB: Bildsensor (Messvorrichtung)
- KB: Kreuzblende
- MH: Halterung
- OM: optische Messvorrichtung
- VK: Videokamera

## Patentansprüche

1. Messvorrichtung (OM) zur lösbaren Verbindung mit dem Objektivflansch (19) einer digitalen Videokamera (VK) für die Bestimmung der Position ihres Bildsensors (BS) unter Anwendung des Kollimator-Prinzips, **gekennzeichnet durch** zwei in einem gemeinsamen Gehäuse (10) der Messvorrichtung (OM) angeordnete konzentrisch zueinander liegende optische Systeme mit einem Projektor (12) dessen Strahlung über einstellbare Blenden (13, 55) und eine nachgeschaltete Verbundlinse (15) auf den Bildsensor (BS) einwirkt zur Ermittlung der Position des Bildsensors der Videokamera entlang der X- und γ-Achse, seiner möglichen Drehung um diese Achsen sowie einer möglichen Krümmung in Bezug auf diese Achsen.

2. Messvorrichtung nach Anspruch 1, **dadurch gekennzeichnet, dass** die Blenden (13, 55) der optischen Systeme mit der Verbundlinse (15) optisch gekoppelte Lochblenden (38, 50, 51) sind, von denen die der Hauptachse (HA) zugeordnete Blende (38) als Schiebeblende (37) und die dem außerhalb der Hauptachse (HA) liegenden Blendenbereich des Autokollimator zugeordnete Blende (55) als Revolverblende (55) mit einer zentralen der Hauptachse (HA) zugeordneten zentralen Öffnung (51) ausgebildet sind.

3. Messvorrichtung nach den Ansprüchen 1 und 2, **dadurch gekennzeichnet, dass** die Lochblenden (13, 55) und die Verbundlinse (15) fluchtend mit der Hauptachse (HA) der optischen Systeme in einer einen Teil der Messvorrichtung bildenden mehrteiligen Halterung (MH) gelagert sind.

4. Messvorrichtung nach den Ansprüchen 1 bis 3, **dadurch gekennzeichnet, dass** die der Halterung (MH) zugeordneten Revolverblende (55) feststehend und die der Halterung (MH) zugeordnete Schiebeblende (38) als Teil eines kurvengeführten hin- und her beweglichen Schiebers (37) ausgebildet ist.

5. Messvorrichtung nach den Ansprüchen 1 bis 4, **dadurch gekennzeichnet, dass** die Halterung (MH) zwei zylindrische schalenförmige ineinander greifende Gehäuseteile (24, 27) umfasst, zwischen denen ein den Umfang der Gehäuseteile teilweise durchdringendes als Lagerscheibe (29) ausgebildetes Handstellmittel drehbeweglich gelagert ist, dass die Lagerscheibe (29) eine gradlinige Kurvenführung (35) zur Aufnahme der Schieberblende (37) und das Gehäuseteil (26) eine Kurvennut (44) zur Aufnahme einer Führungsrolle (40) der Schieberblende (37) aufweist zwecks deren Überführung in die jeweilige Wirkstellung und dass die Lagerscheibe (29) eine mit der Hauptachse (HA) korrespondierend zentrale Öffnung (42) und mit einer parallel dazu aber außermittig angeordneten Öffnung (43) aufweist.

6. Messvorrichtung nach den Ansprüchen 1 bis 5, **dadurch gekennzeichnet, dass** die mehrteilige Verbundlinse (15) von einer topfförmig ausgebildeten Fassung (55) gehalten ist, die an ihrer äußeren Mantelfläche einem, dem Festlegen der Fassung an dem abgewandten Gehäuseteil (27) einen Flansch (57) sowie eine der Hauptachse zugeordnete und vier symmetrisch außermittig zur Hauptachse (HA) angeordnete Öffnungen (50a, 50b, 50c, 50d) aufweist, von denen die der Hauptachse zugeordnete Öffnung (51) als hohler Führungszapfen (60) ausgebildet ist, der bündig an der Schiebeblende (27) anliegt.

7. Messvorrichtung nach einem der Ansprüche 1 bis 6, **dadurch gekennzeichnet, dass** dem Projektor (12) ein für den Wellenbereich λ [650-750- rot] - durchlässiger Farbfilter (FF), eine Kreuzblende (KB) sowie ein über einen durchlässigen Spiegel beaufschlagbarer Bildsensor (HB) für eine mit der Vorrichtung integrierte Kamera zugeordnet sind.
